# EUROPEAN PATENT SPECIFICATION

(11) **EP 1 463 240 B1**
(45) Date of publication and mention of the grant of the patent: **02.07.2008**
(21) Application number: 04251178.2
(22) Date of filing: 01.03.2004
(51) Int. Cl.: H04L 12/26

(54) **Dynamic streams for network analysis**
Dynamische Ströme für die Netzwerkanalyse
Flux dynamiques pour l'analyse de réseau

(30) Priority: 06.03.2003 US 382939
(43) Date of publication of application: 29.09.2004
(73) Proprietor: Ixia, Calabasas, California 91302 (US)
(72) Inventor: Pepper, Gerald, Calabasas California 91302 (US); Pepper, Gerald, Calabasas, California 91302 (US)
(74) Representative: Wombwell, Francis

(56) References cited:
- US-A- 5 539 729
- US-A1- 2002 016 708
- US-A1- 2003 013 468

## Description

A portion of the disclosure of this patent document contains material which is subject to copyright protection. This patent document may show and/or describe matter which is or may become trade dress of the owner. The copyright and trade dress owner has no objection to the facsimile reproduction by any one of the patent disclosure as it appears in the Patent and Trademark Office patent files or records, but otherwise reserves all copyright and trade dress rights whatsoever.

### BACKGROUND OF THE INVENTION

### Field Of The Invention

The invention relates to testing and analysis of communications networks, systems and devices, and, more specifically, to sending streams of data to test and analyze communications networks, communications systems and traffic analysis.

### Description Of Related Art

Communications networks that include voice, data, and all kinds of digital media are ubiquitous in modem society. Many different kinds of data are shared by and between people and businesses for commerce and pleasure, among many other uses. To assist with the construction and maintenance of communications networks, communications systems include network analyzing devices, network monitoring devices, and network testing devices. The devices may be included as a single unit or may exist as separate units. In addition, the units may be software implemented on a computing devices such as a server computer, or may be stand alone dedicated devices. Examples of prior art arrangements include US Patent No. 5539729 (AT & T Corporation) entitled "Method For Overload Control In A Packet Switch That Processes Packet Streams Having Different Priority Levels" and also in US Published Patent Application No. US 2002/0016708 A1 (Henry Houh) entitled "Method and Apparatus For Utilizing A Network Processor As Part Of A Test System".

Generally, these products allow for the sending, capturing and analyzing of network communications. The network communications may be originated by the communications system or may be typical traffic that is pulled from a network by the product.

One type of network testing device is the traffic generator. Traffic generators are used to originate data on a network which simulates read-world data. Traffic generators are typically batch-oriented. That is, the traffic generator is loaded with one or more traffic patterns, and then the traffic generator originates data on the network accorded to those patterns.

### DESCRIPTION OF THE DRAWINGS

FIG. 1 is a block diagram of an environment in accordance with the invention.

FIG. 2 is a block diagram of an apparatus according to one aspect of the invention.

FIG. 3 is a flow chart of a method of the invention.

FIG 4A shows a timing diagram for a control unit of an apparatus in accordance with the invention.

FIG. 4B shows a timing diagram for a blaster unit of an apparatus in accordance with the invention.

### DETAILED DESCRIPTION OF THE INVENTION

Throughout this description, the embodiments and examples shown should be considered as exemplars, rather than limitations on the apparatus and methods of the invention.

### Systems of the Invention

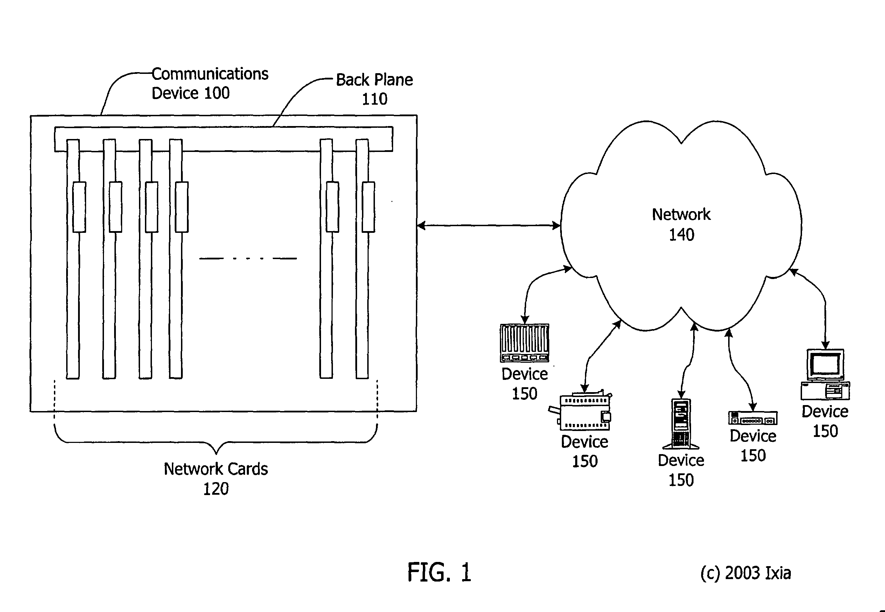

Referring now to FIG. 1, there is shown a block diagram of an environment in accordance with the invention. The environment includes a traffic generator 100, a network 140 and plural network devices 150.

The traffic generator 100 may be a network testing device, performance analyzer, conformance validation system, network analyzer, or network management system. The traffic generator 100 may include one or more network cards 120 and a back plane 110. Traffic generator 100 may be in the form of a card rack, as shown in FIG. 1, or may be an integrated unit. Alternatively, the traffic generator may comprise a number of separate units cooperative to provide traffic generation. The traffic generator 100 and the network cards 120 may support one or more well known standards or protocols such as the 10 Gigabit Ethernet and Fibre Channel standards, and may support proprietary protocols as well.

The network cards 120 may include one or more field programmable gate arrays (FPGA), application specific integrated circuits (ASIC), programmable logic devices (PLD), programmable logic arrays (PLA), processors and other kinds of devices. In addition, the network cards 120 may include software and firmware. The term network card encompasses line cards, test cards, analysis cards, network line cards, load modules, interface cards, network interface cards, data interface cards, packet engine cards, service cards, smart cards, switch cards, relay access cards, and the like. Each network card 120 may provide one or more network ports. The ports of the network cards 120 may be connected to the network through wire, optical fiber, wirelessly or otherwise. Each network card 120 may support a single communications protocol, may support a number of related protocols, or may support a number of unrelated protocols. The network cards 120 may be permanently installed in the traffic generator 100 or field removable. Each network card 120 may provide one or more ports.

The back plane 110 may serve as a bus or communications medium for the network cards 120. The back plane 110 may also provide power to the network cards 120.

The network devices 150 may be any devices capable of communicating over the network 140. The network devices 150 may be computing devices such as workstations, personal computers, servers, portable computers, personal digital assistants (PDAs), computing tablets, and the like; peripheral devices such as printers, scanners, facsimile machines and the like; network capable storage devices including disk drives such as network attached storage (NAS) and storage area network (SAN) devices; networking devices such as routers, relays, hubs, switches, bridges, and multiplexers. In addition, the network devices 150 may include appliances such as refrigerators, washing machines, and the like as well as residential or commercial HVAC systems, alarm systems, and any other device or system capable of communicating over a network.

The network 140 may be a LAN, a WAN, a SAN, wired, wireless, or a combination of these, and may include or be the Internet. Communications on the network 140 may take various forms, including frames, cells, datagrams, packets or other units of information, all of which are referred to herein as data units. The traffic generator 100 and the network devices 150 may communicate simultaneously with one another, and there may be plural logical communications between the traffic generator 100 and a given network device 150. The network itself may be comprised of numerous nodes providing numerous physical and logical paths for data to travel.

A flow of data units originating from a single source on the network having a specific type of data unit and a specific rate will be referred to herein as a "stream." A source may support multiple outgoing and incoming streams simultaneously and concurrently, for example to accommodate multiple data unit types or rates. A source may be, for example, a port on a network interface. "Simultaneously" means "at exactly the same time." "Concurrently" means "within the same time." A single stream may represent one or more concurrent "sessions." A "session" is a lasting connection between a fixed, single source, and a fixed, single destination comprising a sequence of one or more data units. The sessions within a stream share the data rate of the stream through interleaving. The interleaving may be balanced, unbalanced, and distributed among the represented sessions. Two or more sessions represented by the same stream may transmit data units from a source concurrently, but not simultaneously.

Although a session carries data units between two fixed end points, the session may include multiple paths within the network 140. Within the network 140, sessions may be broken apart and reconstituted to allow for greater data rates, better error control, better network utilization, lower costs or otherwise. The sessions may include one or more intermediary paths, channels, or routes between one or more intermediary devices. The multiple intermediary paths, channels or routes may be aligned in parallel and/or serially with respect to one another within the network 140.

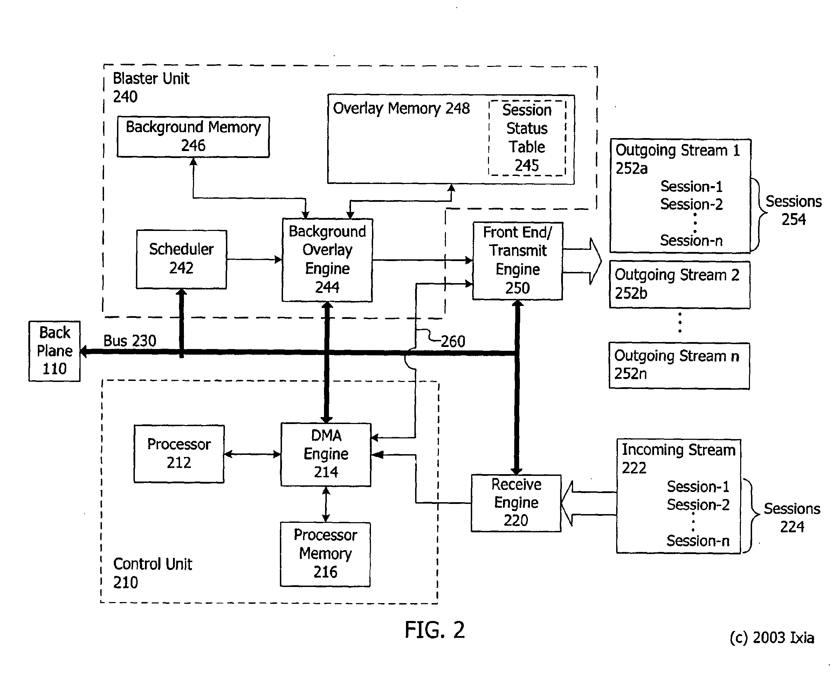

Referring now to FIG. 2, there is shown a block diagram of an apparatus according to one aspect of the invention. The apparatus may be the traffic generator 100 (FIG. 1), the network card 120 (FIG. 1), or one or more components of the traffic generator or the network card 120 (FIG. 1), such as a port. The apparatus includes a control unit 210, a blaster unit 240, a receive engine 220, a front end/transmit engine 250, a bus 230 and a control line 260.

The bus 230 provides a communications path between the control unit 210, the receive engine 220, the blaster unit 240, the front end/transmit engine 250 and the back plane 110. The bus 230 may be used for communicating control and status information, and also data. Communication paths 260, 265 may be used for communicating data, and also control and status information.

The control unit 210 includes a port processor 212, a DMA engine 214, and a port memory 216.

The port processor 212 may be a microprocessor or other programmable processor. From outside the apparatus, the port processor 212 receives control instructions such as patterns of traffic which the apparatus is to generate. The control instructions may be received from a network device over an incoming stream 222. Alternatively, the control instructions may be provided directly to the apparatus via the bus 230, for example via the back plane 110. The port processor 212 may have an application program interface (API) for external control of the apparatus. A user may use a software program on a host to enter commands which create the control instructions that are sent to the port processor 212. The control unit 210 may store the control instructions in port memory 216 before, after, and during their execution.

The DMA engine 214 comprises an interface and control logic providing demand memory access. The DMA engine 214 is coupled to the port processor 212, the port memory 216, the receive engine 220 and the bus 230. In response to requests from the port processor 212, the DMA engine 214 fetches data units and data from the port memory 216. The DMA engine 214 also provides a path from the port processor 212 to the blaster unit 240 and the front end/transmit engine 250.

The receive engine 220 receives incoming data streams, such as stream 222. The incoming stream 222 may represent plural sessions 224. The receive engine 220 may process incoming data units according to a filter provided by or controlled by the port processor 212. After receiving the incoming data units, the receive engine 220 passes the data units to the DMA engine 214, which may store the data units in the port memory 216 or pass them directly to the port processor 212. The receive engine may communicate with the DMA engine 214 via bus 230 and/or comunication line 265. Incoming data units may also be discarded, for example by either the receive engine 220 (e.g., filtered out) or the DMA engine 214. Incoming data units may include control data from a network device, e.g., for negotiating, setting up, tearing down or controlling a session. Incoming data units may also include data from a network device.

The front end/transmit engine 250 transmits outgoing data units as one or more streams 252a, 252b, ... 252n. The data stream 252a may represent plural sessions 254. The data units which the front end/transmit engine 250 transmits may originate from the control unit 210 or the blaster unit 240. The control unit 210 originates control data for negotiating, setting up, tearing down and controlling streams and sessions. The front end/transmit engine 250 is coupled to the bus 230 and communications line 265 for receiving control information and data units.

The blaster unit 240 includes a scheduler 242, a background overlay engine 244, a background memory 246, an overlay memory 248, and a front end/transmit engine 250. The scheduler 242, the background overlay engine 244 and the background memory 246 cooperate to form data units and to pass these data units to the front end/transmit engine 250.

The blaster unit 240 uses session configuration information, comprising instructions for forming and timing transmission of the outgoing data units. The blaster unit 240 may receive the session configuration information from the port processor 212. The session configuration information may include a session identifier (ID) which identifies to which session the session configuration information pertains. The components of the session configuration information may be communicated as a unit or separately.

At least some of the session configuration information - templates and overlays--may be stored in the two memories 246, 248 of the blaster unit 240. The memories 246, 248 may index, sort or otherwise store the session configuration information by the session ID. The background memory 246 stores a template for the data units of each outgoing stream 252. The overlay memory 248 stores an overlay for each outgoing session 254. Whereas the template provides a basic layout of what will be an outgoing data unit, the overlay memory 248 dictates how the template will be modified or completed to produce the data units of the session.

The overlay memory 248 may store session parameters instead of merely specific data for a session. That is, the session parameters may specify that a value of a specific field or bits might be varied in a predetermined fashion. For example, IP addresses may be incremented by a specific amount between specific start and stop values. As another example, the session parameters may be specified on a session-by-session basis.

Although the overlay memory 248 and the background memory 246 are shown as separate units, they may be combined into a single memory. Likewise, the port memory 216 may be combined with one or both of the background memory 246 and the overlay memory 248.

The scheduler 242 manages a schedule of transmission times for each of the outgoing streams, such as streams 252a, 252b, 252n. The scheduler 242 operates like a metronome or clock to ensure that the outgoing streams conform to their respective data rates. Once configured and enabled for a given stream, the scheduler 242 sends a next transmit signal to the background overlay engine 244 when a data unit for the corresponding stream is to be transmitted. Alternatively, the scheduler 242 may signal to the background overlay engine 244 when the background overlay engine 244 should form an outgoing data unit, and the background overlay engine 244 implicitly passes the formed data units to the front end/transmit engine 250 for transmission. The scheduler 242 is connected to the bus 230 is coupled to the bus 230 for receiving control information.

The background overlay engine 244 forms outgoing data units. The background overlay engine 244 is coupled to the scheduler 242, the background memory 246, the overlay memory 248 and the front end/transmit engine 250. The background overlay engine 244 uses the templates in the background memory 246 and overlays in the overlay memory 248, combining them to form outgoing data units. When signaled by the scheduler 242, the background overlay engine 244 passes a formed outgoing data unit for a session of the signaled stream to the front end/transmit unit 250. Because only one session of a stream may be serviced at a time, the background overlay engine 244 selects one session from the stream to transmit a data unit. The background overlay engine 244 may sequence through the sessions of a stream, or may select a next session according to a formula, or otherwise.

The overlay memory 248 may include a session status table 245. The session status table 245 stores session status information. Alternatively, the session status table 245 may be stored in a different memory, such as the background memory 246. The session status information may be one or more bits, and may be stored, for example, in direct, indirect, compressed or encoded form. The session ID may be used to obtain session status information from the session status table 245 for a corresponding session.

The session status information may indicate whether a session is enabled or disabled. If a specific session is disabled, the background overlay engine 244 will not allow data units for the specified session 254 to be transmitted. This may be accomplished by ignoring the signal from the scheduler 242. If a specific session is enabled, then the background overlay engine 244 responds to signals from the scheduler 242, and causes data units for the specified session 254 to be transmitted. The background overlay engine 244 may read the session status information from the session status table 245.

Session status information may originate from the port processor 212. The port processor 212 may, over time, change the session status information for the sessions to therefore enable and disable the sessions. In this way, the control unit 210 may control which sessions the blaster unit 240 is transmitting at any given time.

### Methods of the Invention

Through effective management of the session status information, an apparatus which is otherwise limited to a small number of sessions may be able to generate traffic for a much larger number of sessions. For example, consider a situation where the blaster unit 240 can accommodate a limited number of sessions, and the port processor 212 can accommodate a larger number of sessions. As many as tens of thousands of sessions, or more, may be accomodated. In this way, a single session may be made to appear to be multiple sessions.

The control unit 210 provides the blaster unit 240 with an initial set of session control information and session status information. The initial session control information and session status information may originate from the back plane 110, and may also be provided directly to the blaster unit 240. After the stream is started, the control unit 210 may disable some of those session, load new session configuration information for the disabled sessions, and enable those sessions. This may be achieved in such a way that, at any given time, the blaster unit 240 transmits over no more than its maximum number of sessions, but the total number of session generating traffic during a given period of time is much higher.

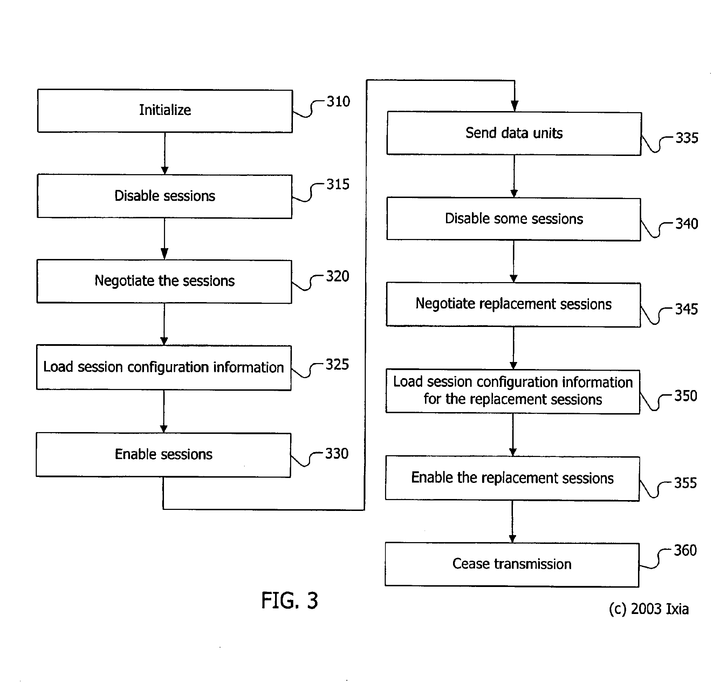

Referring now to FIG. 3, there is shown a flow chart of a method of the invention. In the method, the control unit 210 makes it appear that the blaster unit 240 is generating traffic on more than its maximum number of sessions. The blaster unit's maximum number of streams may be determined, for example, on a per stream basis or on an overall basis. The control unit 210 tracks which sessions the blaster unit 240 is servicing, and which sessions the blaster unit 240 needs to service.

For convenience, sessions will be referred to herein as "original" sessions and "replacement" sessions. The original sessions are those which are represented by a stream when the stream is first started. Replacement sessions are sessions which replace original sessions or other replacement sessions.

In an initialization step (step 310), a session ID is assigned to each of the original sessions for which the blaster unit 240 will be generating traffic. This may be done on a per-stream basis, or for all streams. This may be performed by the control unit 210. Alternatively, there may be predefined session IDs for the stream or for all possible sessions. The control unit 210 may at this point provide the session IDs to the blaster unit 240, though the control unit may do so in conjunction with loading session configuration information as explained below.

In the next step 315, the control unit 210 causes the blaster unit 240 to not cause data units to be transmitted. This may be done on a per-stream basis, or for all streams. The control unit 210 may do this by loading session status information into the blaster unit 240 for the original sessions, where the session status information causes the original sessions to be disabled. For example, record in the session status table 245 for each session may be set to "disabled." A status of "disabled" may result in the background overlay engine 244 dropping frames or ignoring the signal from the scheduler 242. The purpose of this step 315 is to prevent the blaster unit from causing data units to be transmitted before the control unit has set up the original sessions.

Because there may be many possible sessions of a stream to generate, during initialization, the control unit 210 may select which of the sessions will be original sessions. The control unit may also determine when replacement sessions will replace other sessions, for example in accordance with an instruction from the host. The decision of when to make replacements, which sessions to replace and which replacement sessions should be used may also be performed on the fly.

In a step 320, the control unit 210 negotiates the original sessions. In conjunction with these negotiations, the control unit 210 may formulate and/or acquire the session configuration information for the original sessions.

In a step 325, the control unit 210 loads session configuration information for the original sessions into the blaster unit 240. With the session configuration information, the blaster unit 240 can form proper data units. Thus, the control unit 210 next causes the original sessions to be enabled (step 330), and the blaster unit transmits data units for the original physical sessions (step 335). The control unit 210 may enable the sessions by loading session status information into the blaster unit 240 which indicates that the sessions are enabled.

At some later time, the control unit 210 will be ready to replace some of the original sessions with replacement sessions. After selecting which original sessions will be replaced, the control unit 210 may cause one or more of the original sessions to be disabled (step 340). As in step 315, disabling the sessions prevents undesired data units from being transmitted.

The replacement sessions have the same session IDs as the original sessions selected for replacement. Thus, for each replacement session, there must be one session which it will replace, and both sessions will have the same session ID. There may be only one replacement session, though this description is made in reference to plural replacement sessions.

The control unit 210 may also negotiate the replacement sessions at this time (step 345). This step 345 may precede, be performed concurrently with, or follow step 340.

After negotiating the replacement sessions, the control unit 210 loads session configuration information for the replacement sessions into the blaster unit 240 (step 350). This new session configuration information replaces the session configuration information of those original sessions selected for replacement.

Next, the control unit 210 causes the replacement sessions to be enabled (step 355). To do so, the control unit may load session status information into the blaster unit 240 which indicates that the replacement sessions should be serviced by the blaster unit 240. The blaster unit 240 then transmits data units for the replacement sessions, along with those original sessions which were not replaced. Steps 340-355 may be repeated so that all of the desired sessions are generated.

At some point, the stream will terminate (step 360). This may occur when all of the enabled sessions have run their course. Alternatively, the control unit 210 may terminate the stream.

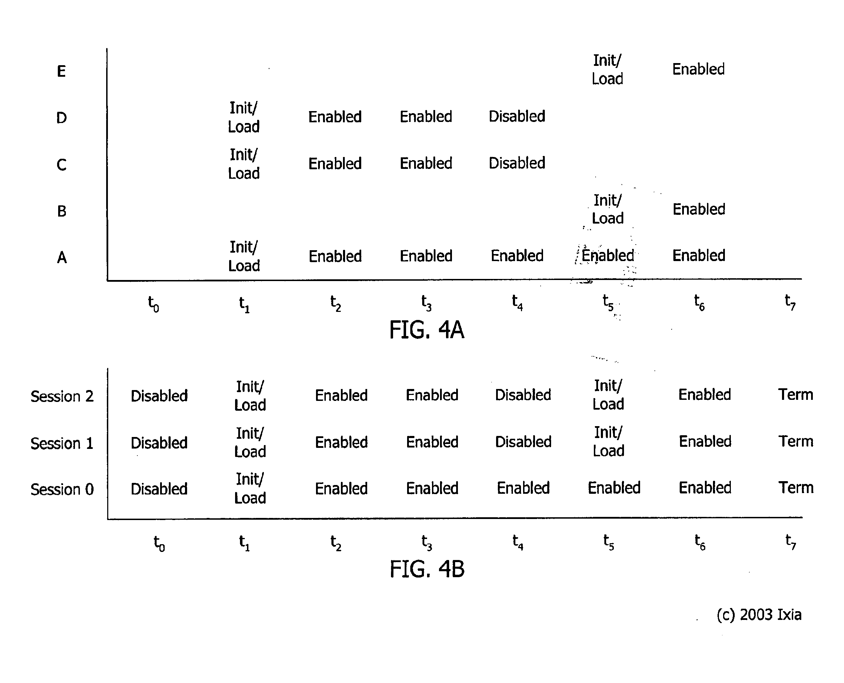

An example may be instructive. Consider an apparatus in which the control unit 210 wants to cause five sessions to be generated in a stream, but the blaster unit 240 is limited to three sessions in the stream. FIG. 4A shows a timing diagram for the control unit 210 and FIG. 4B shows a timing diagram for the blaster unit 240. Consider that the session configuration information for the five sessions the control unit 210 wants to cause are identified as A-E. Consider further that the three sessions have session IDs 0-2. Consider that the control unit 210 has decided that initially, data units will be generated for configurations A, C and D, and that later C and D will be replaced with B and E.

At a time t₀, all of the sessions of the blaster unit 240 are disabled.

At a time t₁, the control unit 210 has negotiated Sessions 0, 1 and 2 and loads configurations A, C and D into the background memory 246 and overlay memory 248. During loading, the sessions remain disabled.

At a later time t₂, the control unit 210 loads "enabled" status into the session status table for Sessions 0, 1 and 2. The blaster unit 240 therefore begins transmitting data units for these sessions. At a later time t₃, Sessions 0, 1 and 2 are still enabled.

At time t₄, in anticipation of replacing Sessions 1 and 2, the control unit 210 has disabled Sessions 1 and 2, though Session 0 remains enabled.

By time t₅, the control unit 210 has negotiated sessions for configurations B and E, and at time t₅ the control unit 210 loads configurations B and E into the background memory 246 and overlay memory 248, replacing the configurations of Sessions 1 and 2. Though the session configuration information may have changed, the session IDs have not.

At a later time t₆, Session 0 is still enabled, and the control unit 210 loads "enabled" status into the session status table for Sessions 1 and 2. The blaster unit 240 therefore again transmits data units for Sessions 1 and 2.

At a later time t₇, the sessions are terminated.

As can be seen, the port processor 212 may control whether a specified session is enabled or not. The port processor 212 may dynamically enable and disable specified sessions any number of times. The port processor 212 may use this mechanism to distribute transmission of data units to selected sessions, balance sessions, and manage the start and stop of sessions.

## Claims

1. An apparatus to generate dynamic streams for network analysis comprising:
a blaster unit (240) to generate and send at least one outgoing stream of data units representing at least one session over a network when respective session status information for the sessions indicate that the sessions are enabled,
a control unit (210) to control over which sessions the blaster unit (240) will send the outgoing data units, including sending to the blaster unit session configuration information to instruct the blaster unit how to form data units for the respective sessions,
the control unit (210) sending to the blaster unit (240) session status information to individually enable and disable the sessions.

2. The apparatus for generating dynamic streams for network analysis of claim 1 wherein
the blaster unit (240) has a maximum number of sessions for which it can send data units concurrently
the control unit (210) has a maximum number of sessions which it can concurrently control, wherein the control unit's maximum number of sessions is greater than the blaster unit's maximum number of sessions.

3. The apparatus for generating dynamic streams for network analysis of claim 1 wherein the blaster unit (240) includes a scheduler (242) to signal when an outgoing data unit for a corresponding stream should be sent.

4. The apparatus for generating dynamic streams for network analysis of claim 1 wherein the blaster unit (240) includes a background overlay engine (244) to form the outgoing data units.

5. The apparatus for generating dynamic streams for network analysis of claim 4 wherein the background overlay engine (244) is adapted to send the outgoing data units over sessions that are enabled.

6. The apparatus for generating dynamic streams for network analysis of claim 5 wherein the background overlay engine (244) determines whether the session is enabled by referring to the session status information for the session in a session status table.

7. The apparatus for generating dynamic streams for network analysis of claim 1 wherein the blaster unit (240) includes
a session status table (245) to store a plurality of the session status information for respective sessions
an overlay memory (248) to store overlay information for respective sessions
a background memory (246) to store background information for respective sessions.

8. The apparatus for generating dynamic streams for network analysis of claim 7 wherein the session status table (245) is included in the overlay memory (248).

9. The apparatus for generating dynamic streams for network analysis of claim 7 wherein the session status table (245) is a memory unit.

10. The apparatus for generating dynamic streams for network analysis of claim 7 further comprising a background overlay engine (244) to combine the background information with the overlay information.

11. The apparatus for generating dynamic streams for network analysis of claim 1 wherein the session status information comprises a session status bit.

12. A method of generating traffic in at least one stream on a network, the stream representing plural sessions, comprising
providing a blaster unit (240) to generate and send at least one outgoing stream of data units representing at least one session over a network when respective session status information for the session indicate that the sessions are enabled
providing a control unit (210) to control over which sessions the blaster unit (240) will send the outgoing data units, including sending to the blaster unit session configuration information to instruct the blaster unit how to form data units for the respective sessions
assigning a session identifier to each of the sessions
the control unit (210) sending to the blaster unit (240) first session status information into the blaster unit, the first session status information causing the sessions to be disabled
the control unit (210) negotiating the sessions
the control unit (210) sending to the blaster unit (240) first session configuration information for the sessions into the blaster unit
the control unit (210) sending to the blaster unit (240) second session status information into the blaster unit, the second session status information causing the session to be enabled
the blaster unit (240) transmitting data units for the enabled sessions in accordance with the first session configuration information
the control unit (210) sending to the blaster unit (240) third session status information into the blaster unit, the third session status information causing at least one selected session to be disabled
assigning the session identifiers of selected disabled sessions to a corresponding number of new sessions to be generated
the control unit (210) negotiating the new sessions
the control unit (210) sending to the blaster unit (240) second session configuration information for the new sessions into the blaster unit (240), whereby the second session configuration information replaces the first session configuration information of the selected sessions
the control unit (210) sending to the blaster unit (240) fourth session status information into the blaster unit (240), the fourth session status information causing the new sessions to be enabled
the blaster unit (240) transmitting data units for the new sessions in accordance with the second session configuration information.

13. The method of generating traffic in at least one stream on a network of claim 12 wherein the session status information comprises a session status bit.

14. A network card comprising the apparatus of claim 1.

15. A traffic generator comprising the apparatus of claim 1.

## Patentansprüche

1. Eine Einrichtung zum Erzeugen dynamischer Ströme zur Netzwerkanalyse, aufweisend:
eine Blaster-Einheit (240) zum Erzeugen und Senden wenigstens eines ausgehenden Datenstroms, der wenigstens eine Session auf einem Netzwerk darstellt, wenn die jeweiligen Session-Statusinformationen für die Sessions anzeigen, dass die Sessions aktiviert sind,
eine Steuer-Einheit (210) zum Steuern, über welche Sessions die Blaster-Einheit (240) die ausgehenden Dateneinheiten senden wird, wobei Session-Konfigurationsinformationen an die Blaster-Einheit gesendet werden, um die Blaster-Einheit zu instruieren, wie Dateneinheiten für die jeweiligen Sessions zu bilden sind,
wobei die Steuer-Einheit (210) der Blaster-Einheit (240) Session-Statusinformationen sendet, um die Sessions individuell zu aktivieren und zu deaktivieren.

2. Die Einrichtung zum Erzeugen dynamischer Ströme zur Netzwerkanalyse gemäß Anspruch 1, wobei
die Blaster-Einheit (240) eine maximale Anzahl von Sessions hat, für welche sie Dateneinheiten gleichzeitig senden kann,
wobei die Steuer-Einheit (210) eine maximale Anzahl von Sessions hat, die sie gleichzeitig steuern kann, wobei die maximale Anzahl von Sessions der Steuer-Einheit größer ist als die maximale Anzahl von Sessions der Blaster-Einheit.

3. Die Einrichtung zum Erzeugen dynamischer Ströme zur Netzwerkanalyse gemäß Anspruch 1, wobei
die Blaster-Einheit (240) einen Einplaner (Scheduler) (242) aufweist, um zu signalisieren, wann eine ausgehende Dateneinheit für einen zugehörigen Strom gesendet werden soll.

4. Die Einrichtung zum Erzeugen dynamischer Ströme zur Netzwerkanalyse gemäß Anspruch 1, wobei die Blaster-Einheit (240) eine Hintergrund-overlay-engine (244) zum Bilden der ausgehenden Dateneinheiten aufweist.

5. Die Einrichtung zum Erzeugen dynamischer Ströme zur Netzwerkanalyse gemäß Anspruch 4, wobei die Hintergrund-overlay-maschine (244) ausgebildet ist, um die ausgehenden Dateneinheiten über aktivierte Sessions zu senden.

6. Die Einrichtung zum Erzeugen dynamischer Ströme zur Netzwerkanalyse gemäß Anspruch 5, wobei die Hintergrund-overlay-maschine (244) bestimmt, ob die Session aktiviert ist, indem sie die Session-Statusinformationen für die Session in einer Session-Statustabelle nachschlägt.

7. Die Einrichtung zum Erzeugen dynamischer Ströme zur Netzwerkanalyse gemäß Anspruch 1, wobei die Blaster-Einheit (240) aufweist
eine Session-Statustabelle (245) zum Speichern einer Mehrzahl der Session-Statusinformationen für jeweilige Sessions,
einen Overlay-Speicher (248) zum Speichern von Overlay-Informationen für jeweilige Sessions,
einen Hintergrund-Speicher (246) zum Speichern von Hintergrund-Informationen für jeweilige Sessions.

8. Die Einrichtung zum Erzeugen dynamischer Ströme zur Netzwerkanalyse gemäß Anspruch 7, wobei die Session-Statustabelle (245) in dem Overlay-Speicher (248) enthalten ist.

9. Die Einrichtung zum Erzeugen dynamischer Ströme zur Netzwerkanalyse gemäß Anspruch 7, wobei die Session-Statustabelle (245) eine Speichereinheit ist.

10. Die Einrichtung zum Erzeugen dynamischer Ströme zur Netzwerkanalyse gemäß Anspruch 7, ferner mit einer Hintergrund-overlay-maschine (244) zum Kombinieren der Hintergrund-Informationen mit der overlay-Information.

11. Die Einrichtung zum Erzeugen dynamischer Ströme zur Netzwerkanalyse gemäß Anspruch 1, wobei die Session-Statusinformationen ein Session-Status-Bit aufweisen.

12. Ein Verfahren zum Erzeugen von Verkehr in wenigstens einem Strom auf einem Netzwerk, wobei der Strom eine Mehrzahl von Sessions repräsentiert, aufweisend
Bereitstellen einer Blaster-Einheit (240) zum Erzeugen und Senden wenigstens eines ausgehenden Stroms von Dateneinheiten, die wenigstens eine Session über ein Netzwerk darstellen, wenn die zugehörigen Session-Statusinformationen für die Session anzeigen, dass die Sessions aktiviert sind,
Bereitstellen einer Steuer-Einheit (210), zum Steuern, über welche Sessions die Blaster-Einheit (240) die ausgehenden Dateneinheiten senden wird, einschließlich eines Sendens von Session-Konfigurationsinformationen an die Blaster-Einheit, um die Blaster-Einheit anzuweisen, wie Dateneinheiten für die diesbezüglichen Sessions zu bilden sind,
Zuordnen eines Session-Identifizierers zu jeder der Sessions,
wobei die Steuer-Einheit (210) an die Blaster-Einheit (240) erste Session-Statusinformationen in die Blaster-Einheit sendet, wobei die ersten Session-Statusinformationen bewirken, dass die Sessions deaktiviert werden,
wobei die Steuer-Einheit (210) die Sessions aushandelt (negotiate),
wobei die Steuer-Einheit (210) an die Blaster-Einheit (240) erste Session-Konfigurationsinformationen für die Sessions in die Blaster-Einheit sendet,
wobei die Steuer-Einheit (210) an die Blaster-Einheit (240) zweite Session-Statusinformationen in die Blaster-Einheit sendet, wobei die zweiten Session-Statusinformationen bewirken, dass die Session aktiviert wird,
wobei die Blaster-Einheit (240) Dateneinheiten für die aktivierten Sessions gemäß den ersten Session-Konfigurationsinformationen überträgt,
wobei die Steuer-Einheit (210) an die Blaster-Einheit (240) dritte Session-Statusinformationen in die Blaster-Einheit (240) sendet, wobei die dritten Session-Statusinformationen bewirken, dass wenigstens eine ausgewählte Session deaktiviert wird,
Zuordnen des Session-Identifizierers von gewählten deaktivierten Sessions zu einer zugehörigen Anzahl von neuen Sessions, die zu erzeugen sind,
wobei die Steuer-Einheit (210) die neuen Sessions aushandelt,
wobei die Steuer-Einheit (210) an die Blaster-Einheit (240) zweite Session-Konfigurationsinformationen für die neuen Sessions in die Blaster-Einheit (240) sendet, wobei die zweiten Session-Konfigurationsinformationen die ersten Session-Konfigurationsinformationen der ausgewählten Sessions ersetzen,
wobei die Steuer-Einheit (210) an die Blaster-Einheit (240) vierte Session-Statusinformationen in die Blaster-Einheit (240) sendet, wobei die vierten Session-Statusinformationen bewirken, dass die neuen Sessions aktiviert werden,
wobei die Blaster-Einheit (240) Dateneinheiten für die neuen Sessions gemäß den zweiten Session-Konfigurationsinformationen überträgt.

13. Das Verfahren zum Erzeugen von Verkehr in wenigstens einem Strom auf einem Netzwerk gemäß Anspruch 12, wobei die Session-Statusinformationen ein Session-Status-Bit aufweisen.

14. Eine Netzwerkkarte mit einer Einrichtung gemäß Anspruch 1.

15. Ein Traffic-Generator mit einer Einrichtung gemäß Anspruch 1.

## Revendications

1. Dispositif pour générer des flux dynamiques pour une analyse de réseau, comprenant:
une unité de pilotage (240) pour générer et envoyer au moins un flux sortant d'unités de données représentant au moins une session sur un réseau lorsque des informations d'état de session respectives pour les sessions indiquent que les sessions sont actives;
une unité de commande (210) pour commander les sessions sur lesquelles l'unité de pilotage (240) enverra les unités de données de sortie, comprenant l'envoi à la session d'unité de pilotage d'informations de configuration pour communiquer à l'unité de pilotage la manière de former les unités de données pour les sessions respectives,
l'unité de commande (210) envoyant à l'unité de pilotage (240) des informations d'état de session pour activer et désactiver individuellement les sessions.

2. Dispositif pour générer des flux dynamiques pour une analyse de réseau selon la revendication 1, dans lequel:
l'unité de pilotage (240) présente un nombre de sessions maximum pour lesquelles elle peut envoyer des unités de données de façon simultanée;
l'unité de commande (210) comprend un nombre de sessions maximum qu'elle peut commander simultanément, dans lequel le nombre de sessions maximum de l'unité de commande est supérieur au nombre de sessions maximum de l'unité de pilotage.

3. Dispositif pour générer des flux dynamiques pour une analyse de réseau selon la revendication 1, dans lequel l'unité de pilotage (240) comprend un ordonnanceur (242) pour indiquer quand une unité de données de sortie pour un flux correspondant devrait être envoyée.

4. Dispositif pour générer des flux dynamiques pour une analyse de réseau selon la revendication 1, dans lequel l'unité de pilotage (240) comprend un moteur de recouvrement d'arrière-plan (244) pour former les unités de données de sortie.

5. Dispositif pour générer des flux dynamiques pour une analyse de réseau selon la revendication 4, dans lequel le moteur de recouvrement d'arrière-plan (244) est adapté pour envoyer les unités de données de sortie sur les sessions qui sont actives.

6. Dispositif pour générer des flux dynamiques pour une analyse de réseau selon la revendication 5, dans lequel le moteur de recouvrement d'arrière-plan (244) détermine si la session est active en se référant aux informations d'état de session pour la session dans une table d'états de session.

7. Dispositif pour générer des flux dynamiques pour une analyse de réseau selon la revendication 1, dans lequel l'unité de pilotage (240) comprend:
une table d'états de session (245) pour stocker une pluralité des information d'état de session pour des sessions respectives;
une mémoire à recouvrement (248) pour stocker des informations de recouvrement pour des sessions respectives; et
une mémoire d'arrière-plan (246) pour stocker des informations d'arrière-plan pour des sessions respectives

8. Dispositif pour générer des flux dynamiques pour une analyse de réseau selon la revendication 7, dans lequel la table d'états de session (245) est contenue dans la mémoire à recouvrement (248).

9. Dispositif pour générer des flux dynamiques pour une analyse de réseau selon la revendication 7, dans lequel la table d'états de session (245) est une unité de mémoire.

10. Dispositif pour générer des flux dynamiques pour une analyse de réseau selon la revendication 7, comprenant en outre un moteur de recouvrement d'arrière-plan (244) pour combiner les informations d'arrière-plan avec les informations de recouvrement.

11. Dispositif pour générer des flux dynamiques pour une analyse de réseau selon la revendication 1, dans lequel les informations d'état de session comprennent un bit d'état de session.

12. Procédé pour générer un trafic dans au moins un flux sur un réseau, le flux représentant plusieurs sessions, comprenant les étapes suivantes:
installer une unité de pilotage (240) pour générer et envoyer au moins un flux sortant d'unités de données représentant au moins une session sur un réseau lorsque des informations d'état de session respectives pour la session indiquent que les sessions sont actives;
installer une unité de commande (210) pour commander les sessions sur lesquelles l'unité de pilotage (240) enverra les unités de données de sortie, comprenant l'envoi à l'unité de pilotage d'informations de configuration de session pour communiquer à l'unité de pilotage la manière de former les unités de données pour les sessions respectives;
attribuer un identifiant de session à chacune des sessions;
l'unité de commande (210) envoie à l'unité de pilotage (240) des premières informations d'état de session dans l'unité de pilotage, les premières informations d'état de session entraînant la désactivation des sessions;
l'unité de commande (210) négocie les sessions;
l'unité de commande (210) envoie à l'unité de pilotage (240) des premières informations de configuration de session pour les sessions dans l'unité de pilotage;
l'unité de commande (210) envoie à l'unité de pilotage (240) des deuxièmes informations d'état de session dans l'unité de pilotage, les deuxièmes informations d'état de session entraînant l'activation de la session;
l'unité de pilotage (240) transmet des unités de données pour les sessions actives sur la base des premières informations de configuration de session;
l'unité de commande (210) envoie à l'unité de pilotage (240) des troisièmes informations d'état de session dans l'unité de pilotage, les troisièmes informations d'état de session entraînant la désactivation d'au moins une session sélectionnée;
attribuer les identifiants de session des sessions désactivées sélectionnées à un nombre correspondant de nouvelles sessions à générer;
l'unité de commande (210) négocie les nouvelles sessions;
l'unité de commande (210) envoie à l'unité de pilotage (240) des deuxièmes informations de configuration de session pour les nouvelles sessions dans l'unité de pilotage (240), dans lequel les deuxièmes informations de configuration de session remplacent les premières informations de configuration de session des sessions sélectionnées;
l'unité de commande (210) envoie à l'unité de pilotage (240) des quatrièmes informations d'état de session dans l'unité de pilotage (240), les quatrièmes informations d'état de session entraînant l'activation des nouvelles sessions; et
l'unité de pilotage (240) transmet des unités de données pour les nouvelles sessions sur la base des deuxièmes informations de configuration de session.

13. Procédé de génération de trafic dans au moins un flux sur un réseau selon la revendication 12, dans lequel les informations d'état de session comprennent un bit d'état de session.

14. Carte réseau comprenant le dispositif selon la revendication 1.

15. Générateur de trafic comprenant le dispositif selon la revendication 1.
